# EUROPEAN PATENT APPLICATION

(11) **EP 3 185 136 A1**
(43) Date of publication of application: **28.06.2017**
(21) Application number: 15201999.8
(22) Date of filing: 22.12.2015
(51) Int. Cl.: G06F 17/30

(54) **A MASS DATA STORAGE SYSTEM AND METHOD**

(71) Applicant: Incubaid Business Center NV, 9080 Lochristi (BE)
(72) Inventor: Vinken, Niko, 8570 Anzegem (BE); De Spiegeleer, Kristof Mark Guy, Dubai (AE)
(74) Representative: Plas, Axel Ivo Michel

(57) **Abstract**

A mass data storage system (100) comprises storage disks (101, 102) and an external Network Attached Storage or NAS interface (103). Further, the mass data storage system (100) comprises an integrated processor (104) that automatically processes, in accordance with a script, data received at the external NAS interface (103) and/or data stored in the one or more storage disks (101, 102). Manipulated data that result from the processing are automatically stored in the storage disks (101, 102).

## Description

### Field of the Invention

The present invention generally relates to mass data storage systems, e.g. solutions for storage of petabytes of data that are used by cloud storage provides to offer cloud storage services. The invention in particular concerns improvements of such mass data storage systems that increase the usability of data stored therein.

### Background of the Invention

Over the past decades, data storage has shifted from local data storage, i.e. storage on hard disks in or near the computer that generates the data, to so called Network Attached Storage or NAS, i.e. storage on a remote system of disks that is accessible via a network, typically the Internet, and a NAS interface. The NAS interface can be implemented through different protocols, e.g. CIFS, NFS or FTP. Such NAS system contains no CPU or processor, except a small processor for protocol transformation between the NAS interface and the storage disks, and an eventual processor for reliability enhancement through redundant storage.

Over time, the amount of data stored in NAS systems has been growing exponentially. NAS systems hence need to be scalable to sustain this permanent growth in amounts of data to be stored. Likewise, the speed requirements on NAS systems have increased over time.

Several solutions have been developed to increase the reliability and speed of NAS systems. VMWare has developed "converged storage" and Amazon has introduced "object storage" in answer to some of the above identified problems of traditional NAS systems.

A more recent problem of mass storage systems is the poor usability of data stored in such systems. Data stored in such systems are ageing quickly as a result of which they are never retrieved and used. In many cases, aged data stored in mass data storage systems are not deleted. As a consequence thereof, unusable data keep occupying storage space and contribute to the paradigm of ever growing storage requirements, while reducing the speed of data storage systems.

United States patent application US2007/0291642A1 entitled "NAS System and Information Processing Method for the Same" describes a NAS system with storage disks that are internally loop-connected to one another via a fibre channel loop or FC loop. The internal FC loop enhances the expandability and scalability of the NAS system because newly added storage disks become reachable without restrictions on the data transfer performance of the external communications network transmitting/receiving data to/from the storage disks.

US2007/0291642A1 is disadvantageous because it requires that all NAS units are equipped with backend FC ports in addition to the network ports, and it requires additional optical fibre wiring in the NAS to constitute the FC loop between the NAS units. The optical wiring must be expanded each time the NAS is expanded with an additional storage disk, hence requiring human interventions and manipulations that are error prone. US2007/0291642A1 also requires that the NAS units in a NAS system are master/slave configured: one NAS unit must be configured as a master whereas all other NAS units must be configured as slaves. This further enhances the configuration complexity of the NAS system. Further, US2007/0291642A1 does not improve the usability of stored data in the NAS system.

United States patent application US2007/0220205A1 entitled "NAS with WORM Function" recognizes in paragraph [0004] the problem of poor usability of old data, as well as the scalability and speed problem of data storage in traditional NAS systems. Known improvements to the usability problem rely on layered data storage or caching: fresh data are stored in high-speed storage whereas old data are stored in low-speed storage. Long term file retention may be managed through a Write Once Read Many function or WORM function. US2007/0220205A1 introduces a controller that enables to implement a WORM function on a storage device at logical device level such that old resources can be cut-back and stored in a NAS system while fresh data are stored closer to the client.

Although US2007/0220205A1 enables to combine layered storage with a WORM function to address the scalability problem of NAS systems, it still does not improve the usability of old data. It only takes benefit of the fact that old data are poorly consulted.

### Summary of the Invention

It is an objective of the present invention to disclose a system and method for mass data storage that resolves the above identified problem of decreasing usability of data stored in such systems. It is a further objective of the system and method according to the present invention to contribute to the scalability, reliability and speed of mass data storage.

According to the present invention, the above identified objective is realized by the system for mass data storage system defined by claim 1, comprising:
- one or more storage disks;
- an external Network Attached Storage or NAS interface; and
- a processor adapted to automatically process, in accordance with a script, data received at the external NAS interface for storage and/or data stored in the one or more storage disks, and adapted to automatically store manipulated data that result from the processing in the one or more storage disks.

Indeed, according to the present invention, automated processing of data is integrated in a NAS system in order to manipulate the data and store the manipulated data in the NAS system. This way, data are kept fresh and usable over time. The data that are processed internally in the NAS system may be newly received data, processed immediately after storage in the NAS system, or may be older data available in the NAS system and processed to enhance their usability. The automated internal processing is done in accordance with a script.

In an embodiment of the mass data storage system according to the present invention, defined by claim 2, the script and processor are adapted to perform data dependent processing.

Thus, the automated internal processing of data in the NAS system according to the invention may be different for different types of data. As an example, photos may be processed to be replaced by a smaller version, i.e. a compressed version or a version with reduced resolution. The smaller version may be used to produce an index of photos that is searchable more easily, hence increasing the usability. Over time, the smaller version of the photos may even replace the original version of the photos, for instance to reduce storage space occupancy. In a videostream received from a security camera, the internal processor in the NAS system according to the present invention may automatically apply face recognition and store the outcome thereof in the NAS, again increasing the usability. An MS Word file may be processed automatically to be converted in a pdf file. The pdf file is stored in the NAS system in addition to or in replacement of the MS Word file. Etc.

As is further specified by claim 3, the NAS interface in the mass data storage system according to the present invention, may be one of:
- a Common Internet File System interface or CIFS interface;
- a Network File System interface or NFS interface;
- a File Transfer Protocol interface or FTP interface.

It is important to notice that the automated processing of data is implemented internally in a system that further exposes an external NAS interface, e.g. a CIFS, NFS or FTP interface, towards a communication network, typically the Internet.

In an embodiment of the mass data storage system according to the present invention, defined by claim 4, the processor is adapted to generate reports including one or more of:
- an amount of performed processing steps;
- an amount of processing time;
- a percentage of data processed.

Thus, the automated internal processing in a NAS system according to the present invention may be supplemented with a reporting function. The processor then generates reports with respect to the automated processing, like for instance a report mentioning the number of processing steps executed the past day, week or month, a report mentioning the amount of processing time the past day, week or month, in either absolute value or percentages, a report mentioning the percentage of data stored in the NAS system or in a part of the NAS system that have undergone certain automatic processing already, etc.

Optionally, as defined by claim 5, in the mass data storage system according to the present invention, the processor is adapted to perform at least part of the processing in real time on streaming data received at the external NAS interface.

Indeed, whereas the automated internal processing according to the present invention may manipulate data stored in the NAS for a longer period in order to improve their usability, the internal processing may also be applied in real time to a data stream received at the NAS interface and stored in the NAS system. The data thus may be stored in the NAS system and become processed within seconds in order to generate manipulated data that are also stored on top of or in replacement of the just received and stored original data.

In an embodiment of the mass data storage system according to the present invention, defined by claim 6, the data comprise CCTV images and the processing comprises image processing.

Closed-Circuit Television images or CCTV images as produced by security cameras represent massive amounts of data to be stored, e.g. up to 1 Terabyte per month. The value or usability of these images drops quickly over time. Through image processing, the stored CCTV images can be kept fresh: through compression or frame dropping, the amount of data to be stored and searched can be controlled, through processing the images and generating statistics, the original images over time even may be deleted entirely and replaced by the statistics.

As further specified by claim 7, the image processing in the mass data storage system according to the present invention may comprise one or more of:
- face recognition;
- image variation detection.

Thus, the processing may not only comprise techniques like compression and frame dropping that reduce the overall amount of data to be stored, but can also contain interpretation of the image content like face recognition in the CCTV images or variation between two successive images in a CCTV image stream. Instead of keeping the original images in storage, the NAS system according to the present invention may maintain the image processing results, i.e. an indication of the recognized faces, a description of the noticed changes between successive images, ... such that in the long term, the amount of data is stored significantly whereas the usability of the stored data remains high.

In an embodiment of the mass data storage system according to the present invention, defined by claim 8, the data comprise still images and the processing comprises life cycle processing.

Also still images like photos taken at events, holidays, etc. occupy vast amounts of data in storage systems, whereas most of these images are never reviewed or used. Through life cycle processing, the amount of data stored can be controlled and the usability of the stored images can be enhanced. Life cycle management may for instance define that the images are overwritten after one month of storage. Alternatively, life cycle management may define that the images that are one month old are resampled and maintained in storage at lower resolution. This way, the resolution at which images are kept will gradually decrease over time.

As further specified by claim 9, the life cycle processing in the mass data storage system according to the present invention may comprise one or more of:
- periodic resolution reduction;
- periodic frame deletion.

Thus, as described above, periodic resolution reduction, e.g. monthly resolution reduction of still images kept in storage will ensure that the amount of storage space occupied by older images reduces gradually. Alternatively or supplementary, frames or still images may be deleted periodically to further reduce the storage space occupancy by old, unused images.

In an embodiment of the mass data storage system according to the present invention, defined by claim 10, the data comprise sensor data and the processing comprises aggregation.

In the internet of things or iOT, the amount of sensor data that is stored is voluminous. These sensor data are ageing rapidly as a result of which their usability decreases fast over time. Through automatic processing internally in the NAS system where these sensor data are stored, the storage space occupancy by such sensor data is kept under control while the sensor data themselves are manipulated as a result of which their usability is enhanced. Sensor data will typically be aggregated to stay useful and compact in size.

As further specified by claim 11, the aggregation in the mass data storage system according to the current invention may comprise one or more of:
- summing;
- averaging.

Indeed, large amounts of sensor data collected from one or more sensor in iOT can be aggregated through calculating the average and storing the average instead of keeping the original sensor data in storage. Alternatively or supplementary, the sensor data may be summed automatically and the sum may be stored in the NAS system according to the present invention whereas the original sensor data are deleted over time.

In addition to a mass data storage system as defined by claim 1, the present invention also relates to a corresponding mass data storage method as defined by claim 12, the method comprising:
- storing data received at an external Network Attached Storage or NAS interface in one or more storage disks of a mass data storage system;
- automatically processing internally in the mass data storage system, in accordance with a script, data received at the external NAS interface for storage and/or data stored in the one or more storage disks; and
- automatically storing manipulated data that result from the processing in the one or more storage disks.

### Brief Description of the Drawings

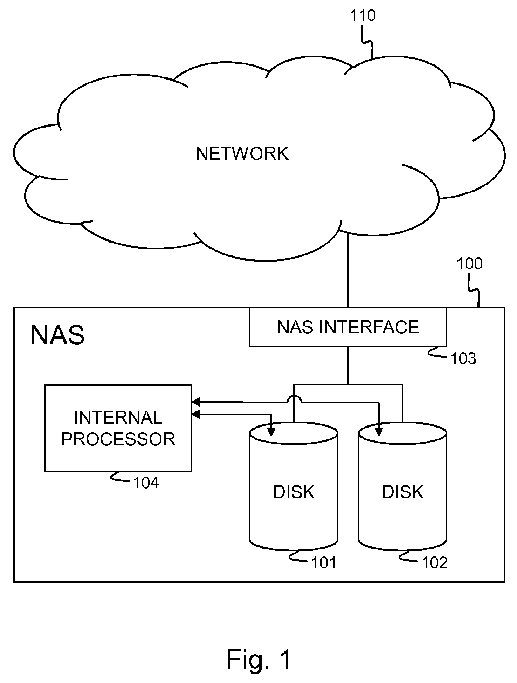

Fig. 1 is a functional block scheme of an embodiment of the mass data storage system 100 according to the present invention.

### Detailed Description of Embodiment(s)

Fig. 1 shows a Network Attached Storage system, 100 or NAS, connected to the Internet, 110 or NETWORK, via its NAS interface 103. The NAS system 100 comprises two storage disks 101 and 102, and an internal processor 104. The NAS interface 103 is coupled to the storage disks 101 and 102. The internal processor 104 is also coupled to the storage disks 101 and 102. It is important that the coupling between the internal processor 104 and the storage disks 101, 102 does not encompass the NAS interface 103.

In the next paragraphs, it is assumed that a Closed-Circuit Television or CCTV application continuously stores video images produced by security cameras in NAS system 100. The moving images produced by the cameras hence are transferred over the internet 110 to the NAS interface 103 of NAS system 100 to be stored therein. Upon receipt of the images, the NAS interface 103 shall transfer the images to disk 101 or disk 102 or both for storage depending on backup or redundancy settings. Although not drawn in Fig. 1, the NAS system 100 may contain limited state-of-the-art processing functionality in between the NAS interface 103 and the storage disks 101, 102 for eventual protocol conversion and load balancing. Such state-of-the-art processing functionality however does not alter or modify the video images to be stored in the disks 101, 102. In addition, a picture archive application is storing photos or still images in disks 101 and 102. Similarly to the video images from the security cameras, the photos are transferred over the internet 110 to the NAS interface 103 of NAS system 100 to be stored in storage disk 101 or storage disk 102, or both, depending on backup or redundancy settings. State-of-the art processing not altering the photos may be performed in between the NAS interface 103 and the storage disks 101, 102, like for instance protocol conversions executed by limited processors. Further, an enterprise application is storing files, e.g. word documents or xls files, in the NAS system 100. Also these files are transferred over the internet 110 to NAS interface 103, eventually processed by limited processors not altering the content of the files, and stored in storage disk 101, storage disk 102 or both depending on backup or redundancy settings. At last, an iOT application stores sensor data, e.g. temperature values, humidity values, etc. measured at various locations and at regular time intervals in the NAS system 100. The sensor data are also conveyed over the internet 110 to NAS interface 103, eventually limitedly processed without their content being altered, and stored in storage disks 101, storage disk 102 or both depending on backup or redundancy settings.

The data produced by the CCTV application for storage in the NAS system 100 are massively growing, i.e. in the range of terabytes per month. Similarly, the amount of photos or still images received from the picture archiving application, and the amount of files received from the enterprise application are growing steadily with negative impact on the available capacity and speed of the NAS system as well as on the usability of the data stored: the percentage of video images, photos or files that is ever retrieved and consulted again, is very low and even decreases with the age of the data. Therefore, the internal processor 104 will automatically process the video images, photos and files stored in the storage disks 101, 102. The automatic processing comprises automated life cycle management processing, automated image processing, automated analysis and statistics generation, automated format conversions, and/or automated aggregation as described below.

The internal processor 104 is configured to automatically process data stored in the storage disks 101, 102, to thereby generate manipulated data, and to store the manipulated data in the storage disks 101, 102. The automated processing executed by the internal processor 104 is different for different types of data. The video images received from the CCTV application are retained in storage uncompressed for one month. These video images are subject to face recognition processing by internal processor 104, and the results of the face recognition processing are also stored in disks 101, 102. Video images that were kept one month in storage compressed by the internal processor 104, and a fraction of frames is deleted. Only the compressed version of undeleted frames is kept in storage. This automated compression and frame deletion is repeated monthly for the video images kept in storage. As a result, the storage space occupied by video images from CCTV cameras is reduced every month. The older the video images, the less frames are kept in storage, and the smaller the resolution of the kept frames as a result of the compression technique applied. Over time, the results of face recognition and video images whose resolution gradually decreases are kept in storage. The results of the frame recognition have higher usability in the context of security or surveillance than the massive amount of original video images which becomes unsearchable over time.

For photos received from the picture archiving application, the internal processor 104 automatically applies geocaching and mapping. Information with respect to the location where a photo was taken is stored automatically with the photo in storage disks 101, 102. This makes photos more searchable later and consequently their usability increases. In addition, the internal processor 104 automatically generates for each photo a smaller version, i.e. a version of the still image with reduced resolution. The images with reduced resolution are automatically added to a photo index by the internal processor 104. Again, automatically indexing the photos and storing the index with low resolution versions of the photos in the storage disks 101, 102, makes the photos more searchable and therefore more usable in the long term.

Files received from the enterprise application, e.g. MS Word documents or MS Excel files, are automatically converted into pdf format by the internal processor 104. The automatically generated pdf version of the document is stored in disks 101, 102 together with the original file received. In addition to automatically generating a pdf version of each file, the internal processor 104 also calculates statistics like the number of files per user and stores these statistics also in the storage disks 101, 102. The statistics and the pdf versions of the files again enhance the usability of the stored files, as it is very likely that future consultation of files will be based on pdf.

For the measurement data received from sensors in the iOT application, the internal processor 104 automatically calculates daily averages, weekly averages, monthly averages, median values, sums, etc. The so obtained aggregated values are stored in the storage disks 101, 102 and over time may replace the original sensor data. In other words, sensor data kept for some time may be replaced by a limited set of aggregated values to reduce the storage space occupancy in storage disks 101, 102 and enhance the usability. Over time, aggregated values like average or mean values will become more important than the individual sensor data.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A mass data storage system (100) comprising:
- one or more storage disks (101, 102);
- an external Network Attached Storage or NAS interface (103); and
- a processor (104) adapted to automatically process, in accordance with a script, data received at said external NAS interface (103) for storage and/or data stored in said one or more storage disks (101, 102), and adapted to automatically store manipulated data that result from said processing in said one or more storage disks (101, 102).

2. A mass data storage system (100) according to claim 1, wherein said script and said processor (104) are adapted to perform data dependent processing.

3. A mass data storage system (100) according to one of the preceding claims, wherein said NAS interface (103) is one of:
- a Common Internet File System interface or CIFS interface;
- a Network File System interface or NFS interface; and
- a File Transfer Protocol interface or FTP interface.

4. A mass data storage system (100) according to one of the preceding claims, wherein said processor (104) is adapted to generate reports including one or more of:
- an amount of performed processing steps;
- an amount of processing time; and
- a percentage of data processed.

5. A mass data storage system (100) according to one of the preceding claims, wherein said processor (104) is adapted to perform at least part of said processing in real time on streaming data received at said external NAS interface (103).

6. A mass data storage system (100) according to one of the preceding claims, wherein said data comprise CCTV images and said processing comprises image processing.

7. A mass data storage system (100) according to claim 6, wherein said image processing comprises one or more of:
- face recognition;
- image variation detection.

8. A mass data storage system (100) according to one of the preceding claims, wherein said data comprise still images and said processing comprises life cycle processing.

9. A mass data storage system (100) according to claim 8, wherein said life cycle processing comprises one or more of:
- periodic resolution reduction;
- periodic frame deletion.

10. A mass data storage system (100) according to one of the preceding claims, wherein said data comprise sensor data and said processing comprises aggregation.

11. A mass data storage system (100) according to claim 10, wherein said aggregation comprises one or more of:
- summing;
- averaging.

12. A mass data storage method comprising:
- storing data received at an external Network Attached Storage or NAS interface (103) in one or more storage disks (101, 102) of a mass data storage system (100);
- automatically processing internally in said mass data storage system (100), in accordance with a script, data received at said external NAS interface (103) for storage and/or data stored in said one or more storage disks (101, 102); and
- automatically storing manipulated data that result from said processing in said one or more storage disks (101, 102).
